# EUROPEAN PATENT APPLICATION

(11) **EP 4 787 484 A1**
(43) Date of publication of application: **05.08.2026**
(21) Application number: 24872207.6
(22) Date of filing: 24.09.2024
(51) Int. Cl.: H01M 4/525, H01M 4/131, H01M 4/36, H01M 4/505

(54) **POSITIVE ELECTRODE ACTIVE MATERIAL AND SECONDARY BATTERY**

(30) Priority: 29.09.2023 JP 2023169251
(71) Applicant: Panasonic Intellectual Property Management Co., Ltd., Kadoma-shi, Osaka 571-0057 (JP)
(72) Inventor: ASAKA, Keisuke, kadoma-shi, Osaka 571-0057 (JP); SUZUKI, Hirotetsu, kadoma-shi, Osaka 571-0057 (JP)
(74) Representative: Novagraaf International SA
(86) International application number: PCT/JP2024/033997
(87) International publication number: WO 2025/070418

(57) **Abstract**

The present invention provides a secondary battery positive electrode capable of reducing direct current resistance of a secondary battery. This positive electrode active material is characterized by including: a mixture including a first lithium transition metal composite oxide having a number average particle diameter (D50) in a range of 10-30 µm and a second lithium transition metal composite oxide having a number average particle diameter (D50) in a range of 0.1-8 µm; and a carbonaceous film formed on at least one of the surface of the first lithium transition metal composite oxide and the surface of the second lithium transition metal composite oxide. The positive electrode active material is characterized in that the carbonaceous film contains at least one of an alkali metal excluding Li and an alkaline earth metal.

## Description

### TECHNICAL FIELD

The present disclosure relates to a positive electrode active material and a secondary battery.

### BACKGROUND

In recent years, secondary batteries, which include a positive electrode, a negative electrode, and an electrolyte, and perform charging and discharging by moving Li ions and the like between the positive electrode and the negative electrode, have been widely used as high-output and high-capacity secondary batteries.

For example, Patent Literatures 1 and 2 disclose using, as an active material for secondary batteries, a composite including an active material body, and a carbonaceous film formed on a surface of the active material body.

### CITATION LIST

### PATENT LITERATURES

Patent Literature 1: JP 2009-140876 A
Patent Literature 2: JP 2001-015111 A

### SUMMARY

Incidentally, in the secondary batteries, reduction in direct-current resistance is required due to an increasing demand for rapid charging.

Therefore, an object of the present disclosure is to provide a positive electrode active material capable of reducing the direct-current resistance of a secondary battery.

A positive electrode active material according to an aspect of the present disclosure includes a mixture containing a first lithium transition metal composite oxide having a number average particle diameter (D50) in a range of greater than or equal to 10 µm and less than or equal to 30 µm, and a second lithium transition metal composite oxide having a number average particle diameter (D50) in a range of greater than or equal to 0.1 µm and less than or equal to 8 µm, and a carbonaceous film formed on at least one of a surface of the first lithium transition metal composite oxide and a surface of the second lithium transition metal composite oxide. The positive electrode active material is characterized in that the carbonaceous film contains at least one of an alkali metal excluding Li and an alkaline earth metal.

A secondary battery according to an aspect of the present disclosure is characterized in that it includes a positive electrode containing the positive electrode active material, a negative electrode, and an electrolyte.

The positive electrode active material according to an aspect of the present disclosure is capable of reducing the direct-current resistance of a secondary battery.

### BRIEF DESCRIPTION OF DRAWING

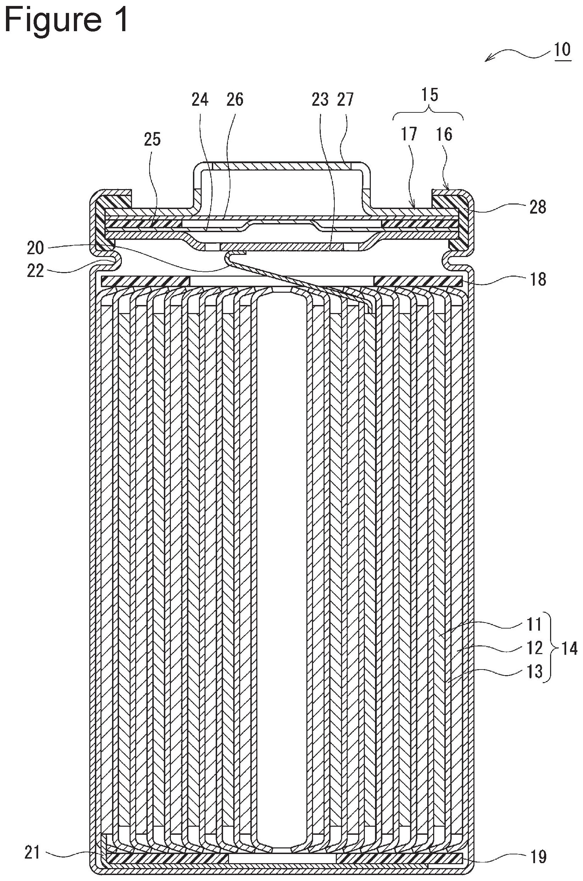

FIG. 1 is a cross-sectional view of a secondary battery as an example of an embodiment.

### DESCRIPTION OF EMBODIMENTS

Hereinafter, an example of an embodiment of a secondary battery according to the present disclosure will be described.

FIG. 1 is a cross-sectional view of a secondary battery as an example of an embodiment. A secondary battery 10 illustrated in FIG. 1 includes a wound electrode assembly 14 formed by winding a positive electrode 11 and a negative electrode 12 with a separator 13 interposed therebetween, an electrolyte, insulating plates 18 and 19 disposed on the top and bottom of the electrode assembly 14, respectively, and a battery case 15 housing the above members. The battery case 15 includes a bottomed cylindrical case body 16 and a sealing assembly 17 that closes an opening of the case body 16. Note that, instead of the wound electrode assembly 14, an electrode assembly having other forms, such as a stacked electrode assembly in which positive electrodes and negative electrodes are alternately stacked with separators interposed therebetween, may be used. Examples of the battery case 15 include metal cases having a cylindrical shape, a prism shape, a coin shape, or a button shape, and resin cases formed by laminating resin sheets (that is, so-called laminated cases).

The electrolyte has, for example, ion conductivity (for example, lithium ion conductivity). The electrolyte may be a liquid electrolyte (electrolytic solution) or a solid electrolyte.

The liquid electrolyte (electrolytic solution) contains, for example, a non-aqueous solvent and an electrolyte salt dissolved in the non-aqueous solvent. Examples of the non-aqueous solvent include esters, ethers, nitriles, amides, and mixed solvents of two or more thereof. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product (for example, fluoroethylene carbonate) in which at least a part of hydrogen in the solvent is substituted with a halogen atom such as a fluorine atom. As the electrolyte salt, for example, a lithium salt such as LiPF₆ is used.

As the solid electrolyte, for example, a solid or gel polymer electrolyte, an inorganic solid electrolyte, or the like can be used. The polymer electrolyte contains, for example, a lithium salt and a matrix polymer, or a non-aqueous solvent, a lithium salt, and a matrix polymer. As the matrix polymer, for example, a polymer material that absorbs a non-aqueous solvent and turns into a gel is used. Examples of the polymer material include a fluororesin, an acrylic resin, and a polyether resin. As the inorganic solid electrolyte, for example, a material known for all-solid-state lithium ion secondary batteries and the like (for example, an oxide-based solid electrolyte, a sulfide-based solid electrolyte, or a halogen-based solid electrolyte) can be used. Note that the electrolytes mentioned above as examples are non-aqueous electrolytes, but the electrolyte is not limited to a non-aqueous electrolyte, and may be an aqueous electrolyte.

The case body 16 is, for example, a bottomed cylindrical metal container. A gasket 28 is provided between the case body 16 and the sealing assembly 17 to keep the interior of the battery airtight. The case body 16 has a projecting portion 22 that supports the sealing assembly 17 and whose side surface partially projects inward, for example. The projecting portion 22 is preferably formed in an annular shape along the circumferential direction of the case body 16, and supports the sealing assembly 17 on an upper surface thereof.

The sealing assembly 17 has a structure in which a filter 23, a lower vent member 24, an insulating member 25, an upper vent member 26, and a cap 27 are sequentially stacked from the electrode assembly 14 side. Each of the members that constitute the sealing assembly 17 has, for example, a disk shape or a ring shape, and the members excluding the insulating member 25 are electrically connected to each other. The lower vent member 24 and the upper vent member 26 are connected to each other at their center portions, and the insulating member 25 is interposed between the circumferential portions of the vent members. When the internal pressure of the secondary battery 10 increases due to heat generated by an internal short circuit or the like, for example, the lower vent member 24 deforms so as to push the upper vent member 26 up toward the cap 27 side and is broken, so that a current path between the lower vent member 24 and the upper vent member 26 is cut off. When the internal pressure further increases, the upper vent member 26 is broken, and gas is released through the opening of the cap 27.

In the secondary battery 10 illustrated in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom side of the case body 16 through the outside of the insulating plate 19. The positive electrode lead 20 is connected to a lower surface of the filter 23, which is a bottom plate of the sealing assembly 17, by welding or the like, and the cap 27, which is a top plate of the sealing assembly 17 electrically connected to the filter 23, serves as a positive electrode terminal. The negative electrode lead 21 is connected to a bottom inner surface of the case body 16 by welding or the like, and the case body 16 serves as a negative electrode terminal.

Hereinafter, the positive electrode 11, the negative electrode 12, and the separator 13 that constitute the secondary battery 10 will be described in detail.

### [Positive electrode]

The positive electrode 11 includes a positive electrode current collector, and a positive electrode mixture layer disposed on the positive electrode current collector. The positive electrode mixture layer may be disposed on one surface or both surfaces of the positive electrode current collector. As the positive electrode current collector, a foil of a metal that is stable in the potential range of the positive electrode 11, such as aluminum or an aluminum alloy, a film having the metal disposed as a surface layer thereof, or the like can be used. The positive electrode mixture layer contains a positive electrode active material. The positive electrode mixture layer may contain a binding material and a conductive agent. The positive electrode 11 can be produced, for example, by applying a positive electrode mixture slurry containing the positive electrode active material, the conductive agent, the binding material, and the like to the surface of the positive electrode current collector, drying the resulting coating film, and then rolling the coating film using a roller or the like.

Examples of the conductive agent contained in the positive electrode mixture layer include carbon materials such as carbon black, acetylene black, Ketjenblack, graphite, carbon nanotubes, carbon nanofibers, and graphene. The content of the conductive agent is, for example, greater than or equal to 0.01 mass% and less than or equal to 10 mass%, and preferably greater than or equal to 0.1 mass% and less than or equal to 5 mass% with respect to the total mass of the positive electrode mixture layer.

Examples of the binding material contained in the positive electrode mixture layer include fluorine-containing resins such as polytetrafluoroethylene (PTFE) and polyvinylidene fluoride (PVdF), polyacrylonitrile (PAN), polyimides, acrylic resins, and polyolefins. Carboxymethyl cellulose (CMC) or a salt thereof, polyethylene oxide (PEO), or the like may also be used. The content of the binding material is, for example, greater than or equal to 0.1 mass% and less than or equal to 10 mass%, and preferably greater than or equal to 0.5 mass% and less than or equal to 5 mass% with respect to the total mass of the positive electrode mixture layer.

The positive electrode active material contained in the positive electrode mixture layer includes a mixture containing a first lithium transition metal composite oxide having a number average particle diameter (D50) in a range of greater than or equal to 10 µm and less than or equal to 30 µm, and a second lithium transition metal composite oxide having a number average particle diameter (D50) in a range of greater than or equal to 0.1 µm and less than or equal to 8 µm, and a carbonaceous film formed on at least one of a surface of the first lithium transition metal composite oxide and a surface of the second lithium transition metal composite oxide. Note that the number-based particle size distribution of the mixture preferably has a peak of greater than or equal to 2% in terms of relative particle amount in each of a particle diameter range of greater than or equal to 10 µm and less than or equal to 30 µm, and a particle diameter range of greater than or equal to 0.1 µm and less than or equal to 8 µm. The carbonaceous film contains at least one of an alkali metal excluding Li and an alkaline earth metal. Use of such a positive electrode active material improves the electron conductivity of the positive electrode mixture layer, and as a result, reduces the direct-current resistance of the secondary battery.

The first lithium transition metal composite oxide and the second lithium transition metal composite oxide include, for example, secondary particles formed by aggregation of primary particles. Herein, the surface of each lithium transition metal composite oxide means the surfaces of the secondary particles of the lithium transition metal composite oxide. That is, the carbonaceous film is present on at least the surfaces of the secondary particles of the first lithium transition metal composite oxide and/or the surfaces of the secondary particles of the second lithium transition metal composite oxide. The carbonaceous film may be present in a dot-like manner so as to at least partially cover the surfaces of the secondary particles of the first lithium transition metal composite oxide and/or the surfaces of the secondary particles of the second lithium transition metal composite oxide, or may be present so as to cover the entire surfaces of the secondary particles. Note that the carbonaceous film may be present at an interface where the primary particles of the first lithium transition metal composite oxide are in contact with each other, and/or at an interface where the primary particles of the second lithium transition metal composite oxide are in contact with each other.

The particle diameter of the primary particles forming the secondary particles of each of the first lithium transition metal composite oxide and the second lithium transition metal composite oxide is, for example, greater than or equal to 0.02 µm and less than or equal to 2 µm. The particle diameter of the primary particles is measured as the diameter of a circumscribed circle in a particle image observed with a scanning electron microscope (SEM).

The number average particle diameter (D50) of the first lithium transition metal composite oxide has only to be in the range of greater than or equal to 10 µm and less than or equal to 30 µm, but is preferably in the range of greater than or equal to 10 µm and less than or equal to 25 µm. The number average particle diameter (D50) of the second lithium transition metal composite oxide has only to be in the range of greater than or equal to 0.1 µm and less than or equal to 8 µm, but is preferably in the range of greater than or equal to 0.5 µm and less than or equal to 5 µm. When the D50 values of the first lithium transition metal composite oxide and the second lithium transition metal composite oxide fall within the above ranges, for example, in the positive electrode mixture layer, gaps between large particles of the first lithium transition metal composite oxide are filled with small particles of the second lithium transition metal composite oxide, so that a large number of contact points between particles are secured. As a result, the electron conductivity of the positive electrode mixture layer is improved, and hence the direct-current resistance of the secondary battery is reduced. The particle size distribution of the mixture of the first lithium transition metal composite oxide and the second lithium transition metal composite oxide is not particularly limited. However, when a mixture used has a peak of greater than or equal to 2% in terms of relative particle amount in each of a particle diameter range of greater than or equal to 10 µm and less than or equal to 30 µm, and a particle diameter range of greater than or equal to 0.1 µm and less than or equal to 8 µm, variations in particle diameter within the particle diameter ranges are reduced, so that a great effect of improving the packing density of the positive electrode active material is exerted. Accordingly, since the first lithium transition metal composite oxide and the second lithium transition metal composite oxide are present in the mixture in a certain amount or more, a large number of contact points between the particles are secured.

In the present disclosure, the number average particle diameter (D50) means the particle diameter at which the cumulative frequency reaches 50% from the smallest particle diameter in the number-based particle size distribution, and is also referred to as the central particle diameter (median diameter) in the number-based particle size distribution. The number-based particle size distribution can be measured by a laser diffraction type particle size distribution measuring apparatus (for example, MT3000II manufactured by MicrotracBEL Corp.) using water as a dispersion medium. The number-based particle size distribution of the mixture is a particle size distribution obtained by plotting the particle diameter on the horizontal axis and plotting the number-based relative particle amount (%) with respect to the total number of particles taken as 100% on the vertical axis. That is, a peak in the number-based particle size distribution of the mixture is a crest observed in a particle size distribution curve obtained by plotting the particle diameter on the horizontal axis and plotting the number-based relative particle amount (%) with respect to the total number of particles taken as 100% on the vertical axis.

The content of the second lithium transition metal composite oxide in the mixture is preferably greater than or equal to 10 mass% and less than or equal to 50 mass%, and more preferably greater than or equal to 20 mass% and less than or equal to 40 mass% with respect to the total mass of the mixture from the viewpoint of, for example, reducing the direct-current resistance of the secondary battery. In addition, the ratio between the first lithium transition metal composite oxide and the second lithium transition metal composite oxide in the mixture is, for example, preferably in the range of greater than or equal to 50 : 50 and less than or equal to 90 : 10 by mass ratio, and more preferably in the range of greater than or equal to 60 : 40 and less than or equal to 80 : 20 by mass ratio from the viewpoint of reducing the direct-current resistance of the secondary battery. Note that the mixture may contain a lithium transition metal composite oxide having a D50 different from those of the first lithium transition metal composite oxide and the second lithium transition metal composite oxide. For example, the mixture may contain a lithium transition metal composite oxide having a number average particle diameter (D50) greater than 30 µm or a lithium transition metal composite oxide having a number average particle diameter (D50) less than 0.1 µm.

The mixture containing the first lithium transition metal composite oxide and the second lithium transition metal composite oxide preferably accounts for greater than or equal to 90 mass%, and more preferably accounts for greater than or equal to 99 mass% of the total mass of the lithium transition metal composite oxides contained in the positive electrode mixture layer.

The first lithium transition metal composite oxide and the second lithium transition metal composite oxide have, for example, a layered rock salt structure belonging to a space group R-3m, a space group C2/m, or the like. From the viewpoint of higher capacity, stability of the crystal structure, and the like, at least one of the first lithium transition metal composite oxide and the second lithium transition metal composite oxide preferably has a layered rock salt structure belonging to the space group R-3m. The layered rock salt structure of the lithium transition metal composite oxide may include a transition metal layer, a Li layer, and an oxygen layer. As Li ions present in the Li layer reversibly enter and exit, a charging and discharging reaction of the battery proceeds.

The content rate of Co in at least one of the first lithium transition metal composite oxide and the second lithium transition metal composite oxide is preferably less than or equal to 5 mol%, more preferably less than or equal to 2 mol%, still more preferably less than or equal to 1 mol%, and particularly preferably 0.1 mol% with respect to the total number of moles of metal elements excluding Li. Since Co is a rare metal and is expensive, it is preferable to reduce the amount of Co used.

At least one of the first lithium transition metal composite oxide and the second lithium transition metal composite oxide may be represented by the general formula LiₐNi_{1-x-y}MnₓM_{y}O_{2+b}. Note that the general formula satisfies 0.9 ≤ a ≤ 1.1, 0 ≤ x ≤ 0.5, 0 ≤ y ≤ 0.1, 0.5 ≤ 1-x-y ≤ 0.95, and -0.05 ≤ b ≤ 0.05, and the element M is an element other than Li, Ni, Mn, and oxygen. Note that the value of "a" that indicates the molar ratio of lithium is increased or reduced by charging and discharging. The element M is preferably at least one selected from the group consisting of Co, Nb, Al, Zr, B, Fe, Cu, Zn, Sn, W, Mo, Si, Ti, Fe, and Cr from the viewpoint of, for example, stabilizing the crystal structure of the lithium transition metal composite oxide.

The content rates of the elements that constitute the lithium transition metal composite oxide can be measured by an inductively coupled plasma atomic emission spectrometer (ICP-AES), an electron probe microanalyzer (EPMA), or the like.

The carbonaceous film may be formed on the surface of the first lithium transition metal composite oxide, on the surface of the second lithium transition metal composite oxide, or on the surface of the first lithium transition metal oxide and the surface of the second lithium transition metal oxide. The carbonaceous film improves the electron conductivity of the positive electrode active material, thereby leading to improvement of the electron conductivity of the positive electrode mixture layer, and consequently reduction in direct-current resistance of the battery.

The carbonaceous film has only to contain at least one of an alkali metal excluding Li and an alkaline earth metal, and preferably contains at least one of Na and K from the viewpoint of enhancing the electron conductivity of the positive electrode active material. The carbonaceous film preferably further contains S from the viewpoint of enhancing the electron conductivity of the positive electrode active material. Note that the carbonaceous film may contain Li. The presence of S in the carbonaceous film can be confirmed by energy dispersive X-ray spectroscopy (TEM-EDX). The presence of alkali metals such as Na and K and alkaline earth metals in the carbonaceous film can be confirmed by X-ray photoelectron spectroscopy (XPS).

The carbonaceous film has a thickness of, for example, less than or equal to 30 nm. The lower limit of the thickness of the carbonaceous film is, for example, 1 nm. The thickness of the carbonaceous film is measured using a cross-sectional image of the positive electrode active material that is observed with a transmission electron microscope (TEM).

Hereinafter, an example of a method for forming a carbonaceous film on the surface of a lithium transition metal composite oxide will be described.
(1) An anionic surfactant is dissolved in water to produce an aqueous solution.
(2) To the aqueous solution, a powder of a lithium transition metal composite oxide is added, and the resulting mixture is stirred to prepare a suspension containing the lithium transition metal composite oxide dispersed in the aqueous solution.
(3) The suspension is filtered, and a residue obtained by filtering is fired, whereby a carbonaceous film can be formed on the surface of the lithium transition metal composite oxide.

In water, the anionic surfactant is adsorbed to the surface of the lithium transition metal composite oxide, and can produce a substantially uniform carbonaceous film. The surfactant is not particularly limited as long as it contains C and at least one of an alkali metal excluding Li and an alkaline earth metal. The surfactant preferably contains at least one of Na and K. The surfactant may further contain S. Examples of the surfactant include sodium lauryl sulfate and potassium lauryl sulfate. The concentration of the surfactant in the aqueous solution is, for example, greater than or equal to 0.1 mass% and less than or equal to 10 mass%, and preferably greater than or equal to 1 mass% and less than or equal to 10 mass%.

### [Negative electrode]

The negative electrode 12 includes, for example, a negative electrode current collector, and a negative electrode mixture layer disposed on the negative electrode current collector. The negative electrode mixture layer may be disposed on one surface or both surfaces of the negative electrode current collector. As the negative electrode current collector, a foil of a metal that is stable in the potential range of the negative electrode 12, such as copper or a copper alloy, a film having the metal disposed as a surface layer thereof, or the like can be used. The negative electrode mixture layer contains, for example, a negative electrode active material and a binding material. The negative electrode 12 can be produced, for example, by applying a negative electrode mixture slurry containing the negative electrode active material, the binding material, and the like to the surface of the negative electrode current collector, drying the resulting coating film, and then rolling the coating film using a roller or the like.

The negative electrode active material contained in the negative electrode mixture layer is not particularly limited as long as the negative electrode active material can reversibly occlude and release lithium ions, and a carbon material such as graphite is generally used. The graphite may be any of natural graphite such as flake graphite, massive graphite, and earthy graphite, and artificial graphite such as massive artificial graphite and graphitized mesophase carbon microbeads. Further, as the negative electrode active material, a metal alloyed with Li, such as Si or Sn, a metal compound containing Si or Sn, a lithium titanium composite oxide, or the like may be used. For example, a Si-containing compound represented by SiOₓ (0.5 ≤ x ≤ 1.6), a Si-containing compound in which Si fine particles are dispersed in a lithium silicate phase represented by Li_{2y}SiO_{(2+y)} (0 < y < 2), or the like may be used in combination with graphite.

Examples of the binding material contained in the negative electrode mixture layer include styrene-butadiene rubber (SBR), nitrile-butadiene rubber (NBR), carboxymethyl cellulose (CMC) or a salt thereof (such as CMC-Na, CMC-K, and CMC-NH₄, and a partially neutralized salt may also be used), polyacrylic acid (PAA) or a salt thereof (such as PAA-Na and PAA-K, and a partially neutralized salt may also be used), and polyvinyl alcohol (PVA). The binding materials may be used alone or in combination of two or more thereof. The content of the binding material is, for example, greater than or equal to 0.1 parts by mass and less than or equal to 10 parts by mass, and preferably greater than or equal to 0.5 parts by mass and less than or equal to 5 parts by mass with respect to 100 parts by mass of the negative electrode active material. The negative electrode mixture layer may contain a conductive agent as in the case of the positive electrode.

### [Separator]

As the separator 13, for example, a porous sheet having ion permeability and insulating properties is used. Specific examples of the porous sheet include a microporous thin film, a woven fabric, and a nonwoven fabric. Suitable materials for the separator include polyolefins such as polyethylene and polypropylene, and cellulose. The separator 13 may be a laminate including a cellulose fiber layer and a thermoplastic resin fiber layer such as an olefin-based resin fiber layer. Furthermore, the separator may be a multi-layer separator including a polyethylene layer and a polypropylene layer, and the separator 13 whose surface is coated with a material such as an aramid-based resin or ceramic may be used.

### EXAMPLES

Hereinafter, the present disclosure will be further described with reference to examples and a comparative example, but the present disclosure is not limited to the following examples.

### <First lithium transition metal composite oxide>

As the first lithium transition metal composite oxide, a lithium transition metal composite oxide having a number average particle diameter (D50) of 17 µm and a composition of LiNi_{0.8}Mn_{0.2}O₂ was prepared.

### <First lithium transition metal composite oxide having carbonaceous film formed on surface thereof>

Sodium lauryl sulfate as a surfactant was dissolved in water to prepare a 10 mass% aqueous solution. To the aqueous solution, the first lithium transition metal composite oxide having a number average particle diameter (D50) of 17 µm and a composition of LiNi_{0.8}Mn_{0.2}O₂ was added, and the resulting mixture was stirred to prepare a suspension having a concentration of 1000 g/L. The suspension was filtered, and a residue obtained by filtering was subjected to vacuum firing. As a result, the first lithium transition metal composite oxide having a carbonaceous film formed on the surface thereof was obtained.

### <Second lithium transition metal composite oxide>

As the second lithium transition metal composite oxide, a lithium transition metal composite oxide having a number average particle diameter (D50) of 4 µm and a composition of LiNi_{0.8}Mn_{0.2}O₂ was prepared.

### <Second lithium transition metal composite oxide having carbonaceous film formed on surface thereof>

Sodium lauryl sulfate as a surfactant was dissolved in water to prepare a 1 mass% aqueous solution. To the aqueous solution, the second lithium transition metal composite oxide having a number average particle diameter (D50) of 4 µm and a composition of LiNi_{0.8}Mn_{0.2}O₂ was added, and the resulting mixture was stirred to prepare a suspension having a concentration of 1000 g/L. The suspension was filtered, and a residue obtained by filtering was subjected to vacuum firing. As a result, the second lithium transition metal composite oxide having a carbonaceous film formed on the surface thereof was obtained.

The first lithium transition metal composite oxide having a carbonaceous film formed on the surface thereof and the second lithium transition metal composite oxide having a carbonaceous film formed on the surface thereof were each observed with a transmission electron microscope (TEM). As a result, each of the carbonaceous films had a thickness of 10 nm. Further, as a result of observation by energy dispersive X-ray spectroscopy (TEM-EDX), a peak attributable to S was observed in the vicinity of 2.2 keV, and the presence of S in the carbonaceous film was confirmed. Further, as a result of XPS analysis, the presence of Na in the carbonaceous film was confirmed.

### <Example 1>

### [Production of positive electrode]

The first lithium transition metal composite oxide having a carbonaceous film formed on the surface thereof was mixed with the second lithium transition metal composite oxide at a mass ratio of 70 : 30 to prepare a mixture. The mixture was used as the positive electrode active material. Note that as a result of measuring the number-based particle size distribution of the mixture, a peak of greater than or equal to 2% in terms of relative particle amount was observed in each of a particle diameter range of greater than or equal to 10 µm and less than or equal to 30 µm, and a particle diameter range of greater than or equal to 0.1 µm and less than or equal to 8 µm. Similar peaks were observed also for the mixtures used in Examples 2 and 3 and Comparative Example below.

A mixture was prepared by mixing 100 parts by mass of the positive electrode active material, 1.1 parts by mass of acetylene black, and 0.9 parts by mass of polyvinylidene fluoride, and the mixture was mixed with N-methyl-2-pyrrolidone (NMP) to prepare a positive electrode mixture slurry. Then, the positive electrode mixture slurry was applied to one surface of a positive electrode current collector made of an aluminum foil having a thickness of 15 µm, and the resulting coating film was dried. After that, the coating film was rolled by a rolling roller and cut into a predetermined electrode size to produce a positive electrode for evaluation. The positive electrode had a region of 20 mm × 20 mm to function as a positive electrode and a connection region with a lead of 5 mm × 5 mm. Thereafter, the positive electrode mixture layer formed on the connection region was further scraped off to expose the positive electrode current collector. Thereafter, the exposed portion of the positive electrode current collector was connected to a positive electrode lead, and a predetermined region at the outer periphery of the positive electrode lead was covered with an insulating film.

### [Production of negative electrode]

A lithium metal foil (thickness: 300 µm) was cut into a 25 mm × 25 mm piece to produce a negative electrode for evaluation. The lithium metal foil was connected to a negative electrode lead via a Ni mesh of 5 mm × 5 mm, and a predetermined region at the outer periphery of the negative electrode lead was covered with an insulating film.

### [Preparation of non-aqueous electrolyte]

Ethylene carbonate (EC), ethyl methyl carbonate (EMC), and dimethyl carbonate (DMC) were mixed at a volume ratio of 20 : 5 : 75. In the resulting mixed solvent, lithium hexafluorophosphate (LiPF₆) was dissolved so that the resulting solution would have a concentration of 1.3 mol/liter to prepare a non-aqueous electrolyte (non-aqueous electrolytic solution).

### [Production of battery for evaluation]

A battery for evaluation was produced using the positive electrode for evaluation and the negative electrode for evaluation. First, the positive electrode and the negative electrode were disposed to face each other with a separator interposed therebetween so that the positive electrode mixture layer and the negative electrode lithium metal layer overlapped each other, thereby obtaining an electrode plate group. Then, an Al laminate film (thickness: 100 µm) cut into a rectangle of 60 mm × 90 mm was folded in half, and the film was thermally sealed at 230°C at an end of a 60-mm-long side, thereby forming a 60 mm × 45 mm cylinder. Thereafter, the produced electrode plate group was placed in the cylinder, the positions of the end surface of the Al laminate film and the insulating film of each lead were aligned with each other, and the film was thermally sealed at 230°C. Then, 0.3 cm³ of a non-aqueous electrolytic solution was injected from the short side of the Al laminate film that was not thermally sealed, and after the injection, the Al laminate film was caused to stand still for 3 minutes under a reduced pressure of 0.06 MPa, and each mixture layer was impregnated with the electrolytic solution. Finally, the Al laminate film was thermally sealed at 230°C at the end surface on the side where the electrolytic solution was injected to produce a battery for evaluation. The battery for evaluation was produced under a dry environment with a dew point of less than or equal to -50°C.

### [Evaluation of direct-current resistance (DCIR)]

Under a temperature environment of 25°C, the battery was charged at a constant current of 0.2 C to 4.5 V, and then charged at a constant voltage of 4.5 V to 0.05 C. Thereafter, constant current discharge was performed at a constant current of 0.2 C until the cell voltage reached 2.5 V. Then, constant current charge was performed at 0.2 C until the state of charge (SOC) reached 50%. Thereafter, the battery was rested for 2 hours, the resistance value was calculated from the voltage drop before and after discharging at a current of 0.3 C for 30 seconds, and the resistance value was defined as DCIR.

### <Example 2>

A battery for evaluation was produced in the same manner as in Example 1 except that a mixture obtained by mixing the first lithium transition metal composite oxide with the second lithium transition metal composite oxide having a carbonaceous film formed on the surface thereof at a mass ratio of 70 : 30 was used as a positive electrode active material.

### <Example 3>

A battery for evaluation was produced in the same manner as in Example 1 except that a mixture obtained by mixing the first lithium transition metal composite oxide having a carbonaceous film formed on the surface thereof with the second lithium transition metal composite oxide having a carbonaceous film formed on the surface thereof at a mass ratio of 70 : 30 was used as a positive electrode active material.

### <Comparative Example>

A battery for evaluation was produced in the same manner as in Example 1 except that a mixture obtained by mixing the first lithium transition metal composite oxide with the second lithium transition metal composite oxide at a mass ratio of 70 : 30 was used as a positive electrode active material.

DCIR evaluation results of the batteries of Examples 1 to 3 and Comparative Example are shown in Table 1. In Table 1, the DCIR values of Examples 1 to 3 are shown as relative values to the DCIR value of Comparative Example taken as 100.

**[Table 1]**

| | Lithium transition metal composite oxide | | DCIR [index] |
|---|---|---|---|
| | First^{*1} | Second^{*2} | |
| Example 1 | with carbonaceous film | without carbonaceous film | 95.0 |
| Example 2 | without carbonaceous film | with carbonaceous film | 94.3 |
| Example 3 | with carbonaceous film | with carbonaceous film | 88.2 |
| Comparative Example | without carbonaceous film | without carbonaceous film | 100 |

| | | | |
|---|---|---|---|
| *1: First lithium transition metal composite oxide having a number average particle diameter (D50) of 17 µm *2: Second lithium transition metal composite oxide having a number average particle diameter (D50) of 4 µm | | | |

As shown in Table 1, the batteries of Examples 1 to 3 had lower DCIR values than that of the battery of Comparative Example. As can be understood from these results, it is possible to reduce the direct-current resistance of a battery by using a positive electrode active material including a mixture containing a first lithium transition metal composite oxide having a number average particle diameter (D50) in a range of greater than or equal to 10 µm and less than or equal to 30 µm, and a second lithium transition metal composite oxide having a number average particle diameter (D50) in a range of greater than or equal to 0.1 µm and less than or equal to 8 µm, and a carbonaceous film formed on at least one of a surface of the first lithium transition metal composite oxide and a surface of the second lithium transition metal composite oxide, wherein the carbonaceous film contains at least one of an alkali metal excluding Li and an alkaline earth metal.

Among Examples 1 to 3, the direct-current resistance of the battery was reduced in the order of Example 1 in which a carbonaceous film was formed only on the surface of the first lithium transition metal composite oxide, Example 2 in which a carbonaceous film was formed only on the surface of the second lithium transition metal composite oxide, and Example 3 in which a carbonaceous film was formed on the surface of the first lithium transition metal composite oxide and the surface of the second lithium transition metal composite oxide.

The present disclosure is further described by the following embodiments.

### Configuration 1:

A positive electrode active material including:
a mixture containing a first lithium transition metal composite oxide having a number average particle diameter (D50) in a range of greater than or equal to 10 µm and less than or equal to 30 µm, and a second lithium transition metal composite oxide having a number average particle diameter (D50) in a range of greater than or equal to 0.1 µm and less than or equal to 8 µm; and
a carbonaceous film formed on at least one of a surface of the first lithium transition metal composite oxide and a surface of the second lithium transition metal composite oxide, wherein
the carbonaceous film contains at least one of an alkali metal excluding Li and an alkaline earth metal.

### Configuration 2:

The positive electrode active material according to Configuration 1, wherein the carbonaceous film is formed on the surface of the first lithium transition metal composite oxide.

### Configuration 3:

The positive electrode active material according to Configuration 1, wherein the carbonaceous film is formed on the surface of the second lithium transition metal composite oxide.

### Configuration 4:

The positive electrode active material according to Configuration 1, wherein the carbonaceous film is formed on the surface of the first lithium transition metal composite oxide and the surface of the second lithium transition metal composite oxide. Configuration 5:

The positive electrode active material according to any one of Configurations 1 to 4, wherein a content of the second lithium transition metal composite oxide is greater than or equal to 10 mass% and less than or equal to 50 mass% with respect to a total mass of the mixture.

### Configuration 6:

The positive electrode active material according to any one of Configurations 1 to 5, wherein the carbonaceous film further contains S.

### Configuration 7:

The positive electrode active material according to any one of Configurations 1 to 6, wherein the carbonaceous film contains at least one of Na and K.

### Configuration 8:

The positive electrode active material according to any one of Configurations 1 to 7, wherein a content rate of Co in at least one of the first lithium transition metal composite oxide and the second lithium transition metal composite oxide is less than or equal to 5 mol% with respect to a total number of moles of metal elements excluding Li.

### Configuration 9:

The positive electrode active material according to any one of Configurations 1 to 8, wherein at least one of the first lithium transition metal composite oxide and the second lithium transition metal composite oxide is represented by a general formula LiₐNi_{1-x-y}MnₓM_{y}O_{2+b} (wherein 0.9 ≤ a ≤ 1.1, 0 ≤ x ≤ 0.5, 0 ≤ y ≤ 0.1, 0.5 ≤ 1-x-y ≤ 0.95, and -0.05 ≤ b ≤ 0.05 are satisfied, and element M is an element other than Li, Ni, Mn, and oxygen).

### Configuration 10:

The positive electrode active material according to any one of Configurations 1 to 9, wherein the carbonaceous film has a thickness of less than or equal to 30 nm.

### Configuration 11:

A secondary battery including:
a positive electrode containing the positive electrode active material according to any one of Configurations 1 to 10;
a negative electrode; and
an electrolyte.

### REFERENCE SIGNS LIST

- 10: Secondary battery
- 11: Positive electrode
- 12: Negative electrode
- 13: Separator
- 14: Electrode assembly
- 15: Battery case
- 16: Case body
- 17: Sealing assembly
- 18, 19: Insulating plate
- 20: Positive electrode lead
- 21: Negative electrode lead
- 22: Projecting portion
- 23: Filter
- 24: Lower vent member
- 25: Insulating member
- 26: Upper vent member
- 27: Cap
- 28: Gasket

## Claims

1. A positive electrode active material comprising:
a mixture containing a first lithium transition metal composite oxide having a number average particle diameter (D50) in a range of greater than or equal to 10 µm and less than or equal to 30 µm, and a second lithium transition metal composite oxide having a number average particle diameter (D50) in a range of greater than or equal to 0.1 µm and less than or equal to 8 µm; and
a carbonaceous film formed on at least one of a surface of the first lithium transition metal composite oxide and a surface of the second lithium transition metal composite oxide, wherein
the carbonaceous film contains at least one of an alkali metal excluding Li and an alkaline earth metal.

2. The positive electrode active material according to claim 1, wherein the carbonaceous film is formed on the surface of the first lithium transition metal composite oxide.

3. The positive electrode active material according to claim 1, wherein the carbonaceous film is formed on the surface of the second lithium transition metal composite oxide.

4. The positive electrode active material according to claim 1, wherein the carbonaceous film is formed on the surface of the first lithium transition metal composite oxide and the surface of the second lithium transition metal composite oxide.

5. The positive electrode active material according to any one of claims 1 to 4, wherein a content of the second lithium transition metal composite oxide is greater than or equal to 10 mass% and less than or equal to 50 mass% with respect to a total mass of the mixture.

6. The positive electrode active material according to any one of claims 1 to 4, wherein the carbonaceous film further contains S.

7. The positive electrode active material according to any one of claims 1 to 4, wherein the carbonaceous film contains at least one of Na and K.

8. The positive electrode active material according to any one of claims 1 to 4, wherein a content rate of Co in at least one of the first lithium transition metal composite oxide and the second lithium transition metal composite oxide is less than or equal to 5 mol% with respect to a total number of moles of metal elements excluding Li.

9. The positive electrode active material according to any one of claims 1 to 4, wherein at least one of the first lithium transition metal composite oxide and the second lithium transition metal composite oxide is represented by a general formula LiₐNi_{1-x-y}MnₓM_{y}O_{2+b} (wherein 0.9 ≤ a ≤ 1.1, 0 ≤ x ≤ 0.5, 0 ≤ y ≤ 0.1, 0.5 ≤ 1-x-y ≤ 0.95, and -0.05 ≤ b ≤ 0.05 are satisfied, and element M is an element other than Li, Ni, Mn, and oxygen).

10. The positive electrode active material according to any one of claims 1 to 4, wherein the carbonaceous film has a thickness of less than or equal to 30 nm.

11. A secondary battery comprising:
a positive electrode containing the positive electrode active material according to any one of claims 1 to 4;
a negative electrode; and
an electrolyte.
